(19)

Europäisches Patentamt
European Patent Office
Office européen des brevets

(11) Veröffentlichungsnummer: **0 085 119**
**A1**

(12) # EUROPÄISCHE PATENTANMELDUNG

(21) Anmeldenummer: **82100616.0**

(22) Anmeldetag: **29.01.82**

(51) Int. Cl.³: **F 02 C 3/02**
F 02 C 5/12, F 23 R 3/26

(43) Veröffentlichungstag der Anmeldung:
**10.08.83 Patentblatt 83/32**

(84) Benannte Vertragsstaaten:
**CH DE FR GB IT LI**

(71) Anmelder: **Ingelheim gen. Echter v.u.z. Mespelbrunn, Peter, Graf von**
**Ebersberger Strasse 34/II**
**D-8000 München 80(DE)**

(72) Erfinder: **Ingelheim gen. Echter v.u.z. Mespelbrunn, Peter, Graf von**
**Ebersberger Strasse 34/II**
**D-8000 München 80(DE)**

(54) **Wärmekraftmaschine mit getrenntem Verdichter- und Kraftmaschinenteil für isobare, isochore oder gemischte Wärmezuführung.**

(57) Die Erfindung besteht aus einem Verbund von Verdichter (1), Brennkammer (2), Strömungskraftmaschinen (4) und Maschinen mit denen bei Strömungsgeschwindigkeiten im Unterschallbereich der Gasfluß aus der Brennkammer so reguliert werden kann, daß in der Brennkammer isochore, isobare oder in einer gewünschten Relation gemischte Wärmezuführung möglich wird.

Als eine Alternative für eine solche Maschine (3) wird ein Schaufelrad (5) vorgesehen, welches sich in einer Kammer (6) mit Öffnungen (7,8) zu einem Raum hohen und einem Raum niedrigen Drucks dreht, wobei die Öffnungen so angeordnet sind, daß der Raum (9) zwischen zwei Schaufeln (10) nie gleichzeitig zum Raum höheren und zum Raum niedrigeren Drucks offen ist.

Gleichzeitig wird eine Maßnahme zur Vermeidung von Spaltverlusten an Schaufelrädern vorgesehen.

Als weitere Alternative der Maschine (3) wird eine Rotationskolbenmaschine mit Dichtungsschiebern im Gehäuse vorgesehen. Für diese Maschine ist eine Kraftübersetzung zwischen drehenden und einmal oder mehr pro Umdrehung hin-und-herbewegten Teilen vorgesehen, die auch hohe Drehzahlen und dynamische Kräfte zuläßt. Als dritte Alternative der Maschine (3) ist ein Schaufelrad mit von der Achse wegführenden Gasführungskanälen vorgesehen.

Zur Steuerung der Gasgeschwindigkeit in der Brennkammer dient eine Vorrichtung zur Änderung des Brennkammerquerschnitts.

./...

EP 0 085 119 A1

46
18
11
14
9
7
6
5
8
10
12
49
48
47
45
2
1
4

Figur 1.

Wärmekraftmaschine mit getrenntem Verdichter - und Kraftmaschinenteil für isobare, isochore oder gemischte Wärmezuführung.

Die Erfindung bezieht sich auf eine Wärmekraftmaschine mit getrenntem Verdichter- und Kraftmaschinenteil für isobare, isochore oder gemischte Wärmezuführung. Dabei werden bekannte oder neuartige Maschinen so als Verdichter und Kraftmaschine eingesetzt, daß das Verhältnis Isobare Wärmezuführung/Isochore Wärmezuführung im Bereich zwischen 0:1 bis 1:0 frei wählbar wird und damit in Abhängigkeit von Verdichter- und Kraftmaschinenwirkungsgrad ein für die jeweilige Anwendung optimales Wärmezuführungsverhältnis gewählt werden kann.

Es kann bei einer solchen Maschinenanordnung eine ebenfalls neuartige Maschine eingesetzt werden, bei der sich ein Schaufelrad in einer Kammer dreht, die durch Öffnungen mit zwei Räumen unterschiedlichen Drucks verbunden ist und diese Öffnungen so angeordnet sind, daß der Raum zwischen zwei Schaufeln niemals gleichzeitig über Öffnungen mit den beiden Räumen verschiedenen Drucks in Verbindung steht.

Ebenfalls kann eine Rotationskolbenmaschine mit Dichtungsschiebern im Gehäuse eingesetzt werden, bei der die Führung der Schieber so gestaltet ist, daß die Flächenpressung der Führungselemente gegen die Führungskurve in beherrschbaren Bereichen liegt.

Wärmekraftmaschinen mit getrenntem Verdichter und Kraftmaschinenteil werden heute in der Regel als Gasturbinen gebaut. Über Radial- oder Axialverdichter wird Luft angesaugt, ihr in einer Brennkammer isobar Wärmeenergie zugeführt und in einer Turbine die bei der Entspannung freiwerdende Strömungsenergie in Drehenergie umwandelt. Für Gasturbinen gilt die Kontinuitätsgleichung:

$$m \cdot v = A \cdot c$$

0085119

mit $m$ in kg/s — der durch eine Stufe strömende Gasmengendurchsatz

$v$ in $m^3/kg$ — das spez. Volumen des Gases an der untersuchten Stelle

$A$ in $m^2$ — der durchströmte Querschnitt

$c$ in m/s — die Strömungsgeschwindigkeit an der untersuchten Stelle

In der Gasturbine sind Brennkammer und Raum zwischen erster und zweiter Turbinenstufe, sowie die Räume zwischen jeweils zwei Turbinenstufen durch die Zwischenräume zwischen Leit- und Läuferschaufeln der dazwischenliegenden Turbinenstufe permanent zueinander offen. Damit ist die Brennkammer, in der ein hoher Druck herrscht, mit der Athmosphäre, in der athmosphärischer Druck herrscht, verbunden. Aus dieser Druckdifferenz entsteht eine Strömung. Der Druck des Gases fällt von der Brennkammer zur zweiten Turbinenstufe und von dort fortschreitend in jeder Turbinenstufe, bis er in der letzten Turbinenstufe athmosphärischen Druck erreicht. Dabei nimmt die Gasgeschwindigkeit beständig zu.
Aus verschiedenen Gründen werden die Strömungsgeschwindigkeiten meist unter der Schallgeschwindigkeit gehalten. Unter der Schallgeschwindigkeit können aber strömende Gase praktisch als inkompressibel angesehen werden. Das heißt, daß für ein im Unterschallbereich strömendes Gas der Druck nicht durch Veränderung des Strömungsquerschnitts oder durch Wärmezuführung erhöht werden kann. Wärmezuführung oder Querschnittsverengung erhöht ausschließlich die Strömungsgeschwindigkeit. Daher ist für eine G a s t u r b i n e n u r i s o b a r e W ä r m e z u f ü h r u n g möglich.

Es läßt sich aber zeigen, daß für einen thermodynamischen Prozeß, bei dem ein gasförmiges Medium adiabatisch verdichtet, dann diesem Medium Wärmeenergie zugeführt wird, dann dieses Medium wieder adiabatisch entspannt und danach die Restwärme abgeführt wird, isochore Wärmezuführung einen besseren thermischen Wirkungsgrad aufweist als isobare. Unter Berücksichtigung realer Wirkungsgrade von Verdichter und Kraftmaschine erweist sich sogar ein gemischter Prozeß mit isobarer und isochorer Wärmezuführung als in der Realität am günstigsten.

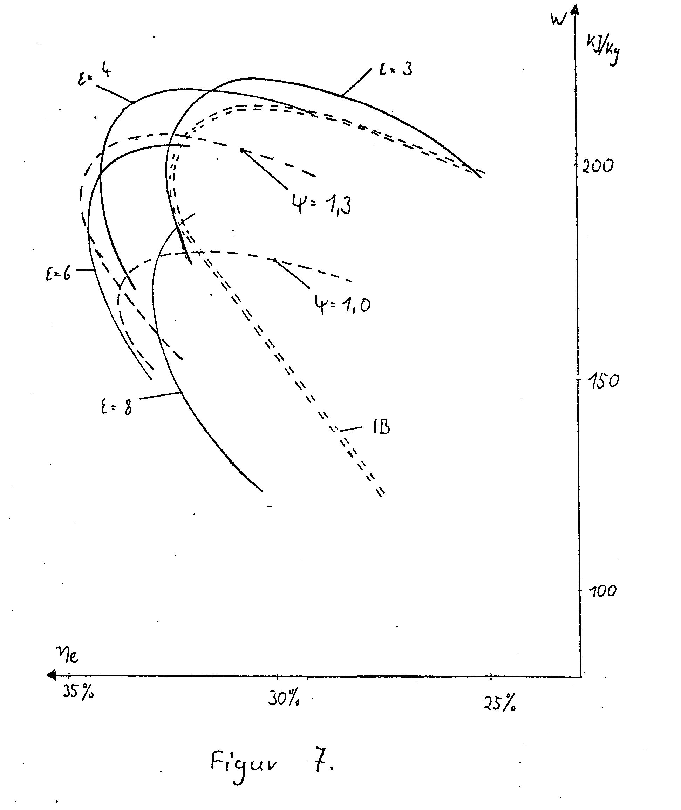

Figur 7 zeigt für eine vor der Kraftmaschine zulässige Maximaltemperatur von 950° C (Turbinenwirkungsgrad $\eta_T$ = 84%, Verdichterwirkungsgrad $\eta_V$ = 82%, Brennkammerwirkungsgrad $\eta_{Br}$ = 97%, mechanischer Wirkungsgrad $\eta_m$ = 98%) die Abhängigkeit von Wirkungsgrad $\eta_e$ und Arbeitsvermögen (pro kg durchgesetzter Luft) von Verdichtung $\varepsilon$ und Volumenvergrößerung $\psi$ ( $\psi$ = spezif. Volumen vor Kraftmaschine/ spezif. Volumen hinter Verdichter) in der Brennkammer. Die doppelt gestrichelte Linie (IB) zeigt die Kurve für rein isobare Wärmezuführung ( = Joul'scher Prozeß = Gasturbinenprozeß), die einfach gestrichelten Linien die Kurven für verschiedene $\psi$, die durchgezogenen Linien die Kurven für verschiedene $\varepsilon$.

Es zeigt sich, daß mit gemischten Prozessen bei gleichem Arbeitsvermögen mit niedriger Verdichtung ($\varepsilon$ = 4, $\psi$ = 1.3) ein besserer Wirkungsgrad zu erzielen ist als beim Joul'schen Prozeß mit wesentlich höherer Verdichtung ($\varepsilon$ = 6). Niedrige Verdichtung bedeutet Einsparung von Verdichterstufen und damit Senkung der Kosten und des Raumbedarfs der Anlage.

Die Erfindung wie sie gekennzeichnet ist, ermöglicht nun durch Wahl des spezifischen Volumens $v_T$ im Intervall $v_V \leq v_T \leq v_V \cdot T_T/T_V$ nach Belieben isochore ($v_V = v_T$), isobare ($v_T = v_V \cdot T_T/T_V$) oder gemischte Wärmezufuhr ($v_V < v_T < v_V \cdot T_T/T_V$).

Es sei dabei

$v_V$ = spezifisches Volumen der Luft am Verdichterausgang

$v_T$ = spezifisches Volumen des Gases vor der Kraftmaschine

$T_V$ = Temperatur der Luft am Verdichterausgang

$T_T$ = Temperatur des Gases vor der Kraftmaschine

Dies wird ermöglicht dadurch, daß man das Volumen der in einer Zeiteinheit abzuführenden Gasmenge festlegen kann.

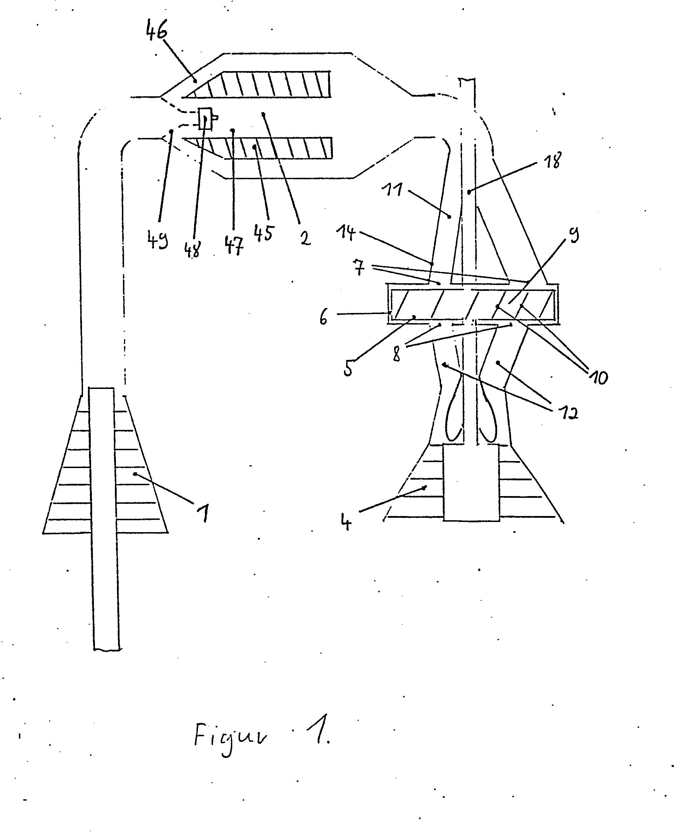

Figur 1 zeigt die Anordnung einer solchen Anlage, bei der ein gasförmiges Medium im Verdichter (1) komprimiert und dann der Brennkammer (2) zugeführt wird. Dort wird ihm durch Erhitzung oder Verbrennung Wärmeenergie zugeführt. In einer Maschine(3), die so gebaut ist, daß mit ihrer Hilfe die Geschwindigkeit, mit der das gasförmige Medium die Brennkammer verläßt, so reduziert werden kann, daß das spezifische Volumen $v_T$ am Brennkammerausgang kleiner als $v_V \cdot T_T / T_V$ wird, verläßt das Medium die Brennkammer und strömt nachfolgenden Kraftmaschinenstufen(4) zu.

Eine Möglichkeit einer Maschine zur Regelung der Gasgeschwindigkeit ist, daß sich zwischen zwei Räumen A und B unterschiedlichen Drucks eine Kammer befindet, die wechselnd zuerst zum Raum höheren Drucks (A) und dann zum Raum niedrigeren Drucks(B) geöffnet wird. Durch Öffnen zum Raum A wird der Druck bzw. das spezifische Volumen in der Kammer auf die Werte des Raumes A mit dem höheren Druck am Kammereingang gebracht. Dann wird die Kammer vom Raum A abgeschlossen und zum Raum B mit dem niedrigeren Druck geöffnet. Nun ändern sich Druck und spezifisches Volumen in der Kammer auf die im Raum B gegebenen Werte. Da bei adiabatischer bzw. isentroper Zustandsänderung eine Verringerung des Druckes mit einer Vergrößerung des spezifischen Volumens einhergeht und eine Erhöhung des Druckes mit einer Verminderung des spezifischen Volumens, strömt ein Teil der im Raum A befindlichen Gasmenge bei Öffnung der Kammer in diese bis sich Kammerdruck und Druck im Raum A im Gleichgewicht befinden. Wird dann die Kammer von A abgeschlossen und zu B geöffnet, strömt ein Teil der in der Kammer befindlichen Menge in den Raum B bis sich Kammerdruck und Druck in B im Gleichgewicht befinden. Die in einer Zeiteinheit von A nach B strömende Gasmenge hängt damit vom Volumen der Kammer, von den Drücken in A und B und der Anzahl der Kammerfüllungen in einer Zeiteinheit ab.

Sei: $p_A$ = Druck im Raum A (bar)
$p_B$ = Druck im Raum B (bar)
$v_A$ = Spezif. Vol. in A vor der Kammer ($m^3/kg$)
$v_B$ = Spezif. Vol. in B hinter der Kammer ($m^3/kg$)

$V_K$ = Volumen der Kammer ($m^3$)
$\varrho$ = Dichte der Luft beim Ansaugen in den Verdichter ($kg/m^3$)
$\varepsilon$ = Verdichtung ( Spez.Vol.vor Verdichter/Spez.Vol hinter Verdichter)
$\psi$ = Faktor der isobaren Vergrößerung (= Spez.Vol.vor Kammer/Spez.Vol.hinter Verdichter)

Wegen $\frac{p_B}{p_A} = \left(\frac{V_A}{V_B}\right)^{\kappa}$ folgt $V_B = \left(\frac{p_A}{p_B}\right)^{1/\kappa} \cdot V_A$

Dann ist die pro Öffnungsdurchlauf von A nach B transportierte Gasmenge $\dot{m}$

$$\dot{m} = V_K \cdot 1/V_T \cdot \left(1 - \left(\frac{p_B}{p_A}\right)^{1/\kappa}\right) \quad Kg$$

Für $v_T$ gilt aber wegen der isentropen Verdichtung $\varepsilon$ und der isobaren Vergrößerung $\psi$

$$V_T = \frac{1}{\varrho} \cdot \frac{1}{\varepsilon} \cdot \psi \quad m^3/kg$$

und daher

$$\dot{m} = V_K \cdot \frac{\varrho \cdot \varepsilon}{\psi} \cdot \left(1 - \left(\frac{p_B}{p_A}\right)^{1/\kappa}\right) \quad Kg$$

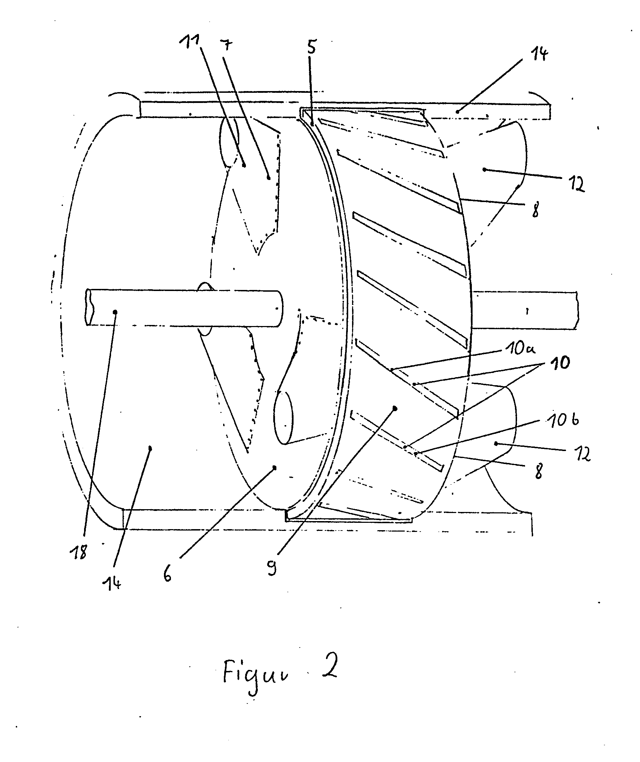

Figur 2 zeigt eine spezielle Ausführung einer solchen Maschine in perspektivischer Sicht, bei der sich ein Schaufelrad(5) in einer Kammer(6) dreht, die über Zulauföffnungen(7) mit dem Raum höheren Drucks und über Ablauföffnungen (8) mit dem Raum niedrigeren Drucks verbunden ist. Die Öffnungen(7)(8) sind dabei so zueinander angeordnet, daß der Raum (9) zwischen zwei benachbarten Schaufeln (10)(10a,10b) nicht gleichzeitig zu Zu- und Ablauföffnungen offen ist.

Dadurch ergibt sich folgender Funktionsablauf:
Bei Drehung des Rades (5) wird der Raum (9) zwischen zwei benachbarten Schaufeln (10a,10b), in dem der niedrige Druck $p_B$ herrscht, hinter einer Zulauföffnung(7) vorbeigeführt und damit zum Raum A höheren Drucks geöffnet. Aus dem Raum A strömt solange Gas in den Raum (9) bis darin der Druck auf $p_A$ angehoben ist. Wegen der Schrägstellung der Zulauföffnung(7) nach Art der Leitschaufeln bei Gasturbinen prallt die Strömung gegen die vordere Schaufel (10a) des Rades und erzeugt dadurch ein Drehmoment. Bei weiterer Raddrehung bewegt sich der Raum (9) von der Zulauföffnung weg zu Ablauföffnung(8).

Nun strömt solange Gas aus diesem Raum (9) durch die Ablauföffnung (8) in den Raum B, bis der Druck auf $p_B$ abgefallen ist. Während des Ausströmens wirkt eine Rückstoßkraft auf die Schaufeln in Drehrichtung, die ebenfalls ein Drehmoment erzeugt. Damit wird insgesamt aus den Druckunterschieden mechanische Arbeit gewonnen.

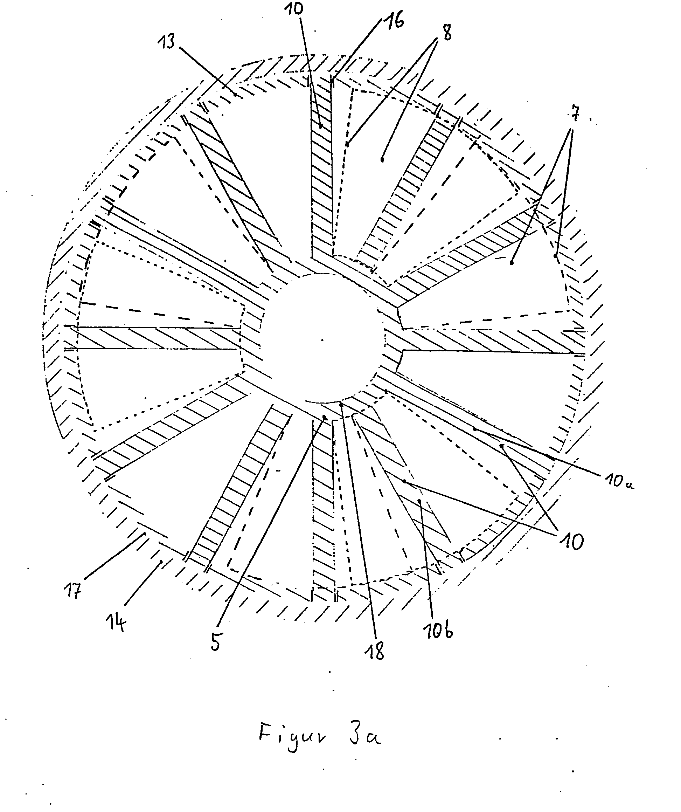

Figur 3a zeigt diese Maschine in der Seitensicht als Schnitt durch das Schaufelrad (5) senkrecht zur Drehachse. Die Einlaß- (7) und Ablauföffnungen(8) sind gestrichelt angedeutet.

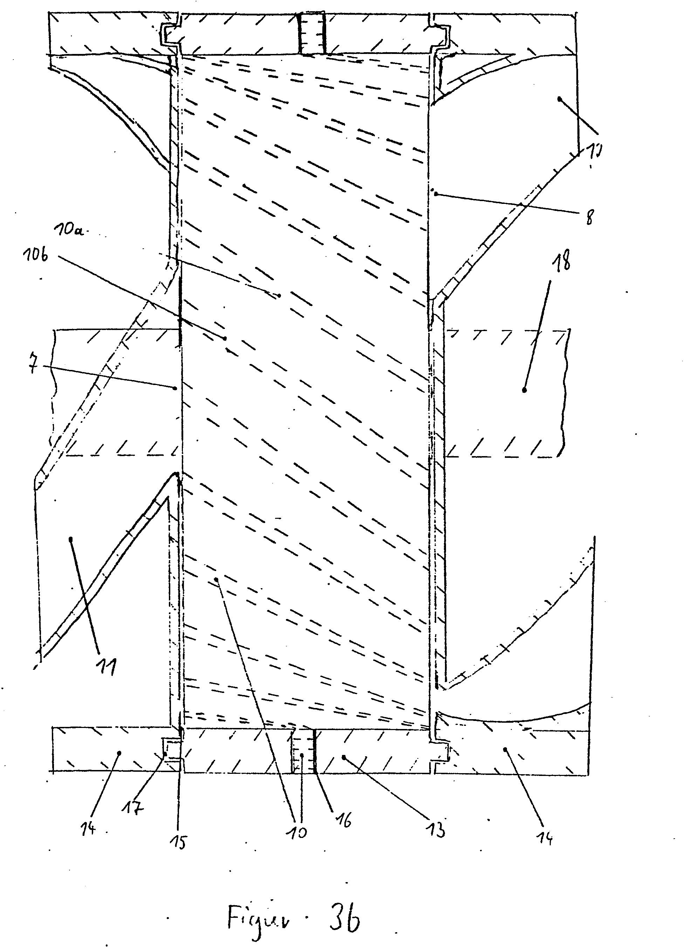

Figur 3b zeigt einen Schnitt entlang der Drehachse des Schaufelrades durch Kammer(6) und Schaufelrad(5). Die Zuführungskanäle(11), die in der Zulauföffnung(7) enden, und die Abführungskanäle(12), die in der Ablauföffnung(8) beginnen, sind ebenfalls gezeigt.

In den Figuren 3a und 3b ist auch ein Ring(13) erkennbar, mit dem die Schaufeln (10) an den Außenenden verbunden sind.
Herkömmliche Gasturbinen haben Spalte zwischen den äußeren Enden der Laufschaufeln und dem Gehäuse(14), die, damit trotz der durch die starke Erwärmung hervorgerufenen Längendehnung der Schaufeln (10) die Drehbarkeit des Läufers (=Schaufelrades (5)) erhalten bleibt, eine genügende. Breite haben müssen. An diesen Spalten entstehen Energieverluste, da das senkrecht oder fast senkrecht auf die Laufschaufeln strömende Gas auch durch diese Spalte strömt ohne Strömungsenergie an die Laufschaufeln abzugeben.
Hier soll der Ring(13) Abhilfe schaffen. Er liegt so im Gehäuse(14), daß die Spaltöffnung (15) zwischen Ring und Gehäuse entweder rechtwinklig zur Strömungsrichtung liegt und damit die Strömung an diesem Spalt vorbeistreicht oder sogar in Strömungsrichtung weist und damit völlig von der Strömung abgewandt ist.
Damit auch weiterhin eine Längendehnung der Schaufeln ermöglicht wird, ist die Befestigung Achse-Schaufeln-Ring nicht völlig starr. Es ist z.B. möglich, daß die Schaufeln (10) so in Öffnungen (16) im Ring(13) stecken, daß sie sich wie durch eine Öse noch in der Länge dehnen können. Oder die Schaufeln bestehen aus zwei Teilen, die so ineinander gesteckt sind, daß sich das eine Teil in Richtung Achse, das andere Teil in Richtung Ring ausdehnen kann.

Eine weitere Möglichkeit einer Maschine zur Regelung der Gasgeschwindigkeit ist eine Rotationskolbenmaschine mit Dichtungsschiebern im Gehäuse. Es ist eine Rotationskolbenmaschine bekannt (EPA-Patentanmeldung 80104562.6 und EPA-Patentanmeldung 81104064.1), bei der sich ein Kolben mit Mulden in der Oberfläche in einem Gehäuse dreht und die Schieber aufgrund der Kolbendrehung in Schlitzen im Gehäuse so hin-und-herbewegt werden, daß sie mit der einen Kante permanent an der Kolbenaußenkontur schleifen. Durch Schleifen an einer Mulde werden die Schieber aus den Schlitzen bewegt, beim Schleifen an einem Buckel in die Schlitze gedrückt.
Zwischen Kolben, zwei Schiebern und Gehäusewand werden somit Kammern gebildet, die bei Kolbendrehung ihr Volumen vergrößern und verkleinern. Eine Gaszu- und -abfuhr erfolgt über permanent offene Kanäle im Kolben. Solche Maschinen können als Verdichter oder Kraftmaschinen eingesetzt werden.
Auch als Maschine zur Regelung der Gasgeschwindigkeit kann diese Maschine vor Strömungskraftmaschinen eingesetzt werden. Wie die in Patentanspruch 2 und 3 beschriebene Maschine arbeitet sie zwischen zwei Räumen A und B unterschiedlichen Drucks. Im Unterschied zur oben genannten ändert sich aber das Kammervolumen während der Kolbendrehung, sodaß die Vergrößerung des spezifischen Gasvolumens unter Abgabe von mechanischer Arbeit bereits in der Maschine vorgenommen wird und bei Öffnung der Kammer zum nachfolgenden Raum B das Medium in der Kammer nicht mehr den Druck und das spezifische Volumen des Raumes A hat. Durch Verkleinerung der Kammer wird dann ihr Inhalt vollständig in den Raum B gepreßt.
Damit eine solche Maschine sinnvoll eingesetzt werden kann, darf sie nicht zu groß sein, muß aber einen genügend hohen Gasdurchsatz ermöglichen. Dies erfordert unter anderem auch eine relativ hohe Drehzahl und demzufolge auch hohe dynamische Kräfte, die gegen eine Schiebersteuerung wirken. Daher muß die Schieberführung so gebaut werden, daß auch unter hohen Belastungen die Flächenpressung zwischen Führungselementen und Führungsspur nicht so groß wird, daß dies zu einer Beschädigung von Führungselementen oder der Führungsspur führt.

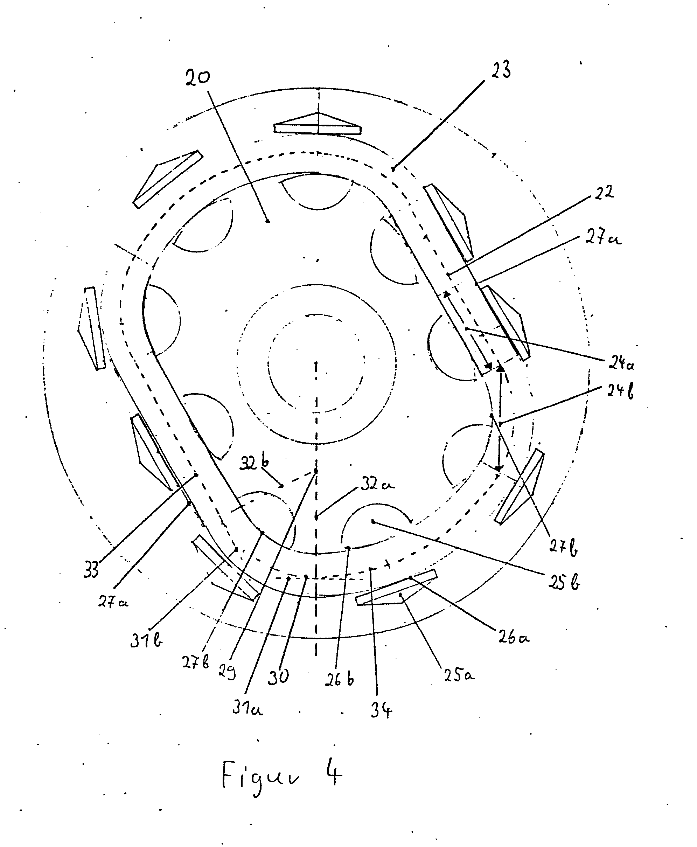

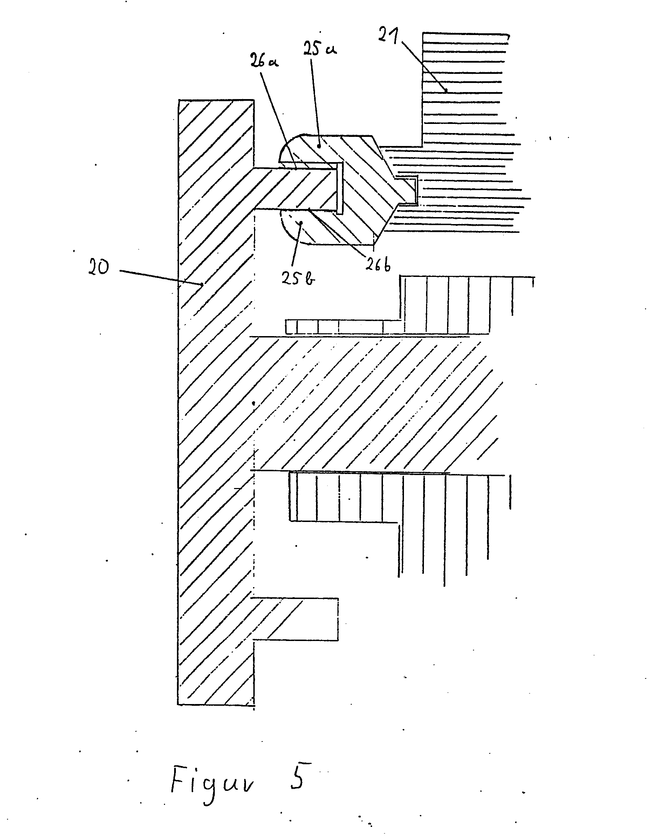

In Patentanspruch 6 (Figur 4 und Figur 5) wird Schutz für ein Kraftübertragungssystem zwischen drehenden (20) und hin-und-hergehenden Teilen (21) begehrt, das auch als Schiebersteuerung (Patentanspruch 7) einer solchen Maschine eingesetzt werden kann. Bei diesem Kraftübertragungssystem ist aufgrund einer Führungskurve (22) die Führungsspur (23) so geformt, daß die Abschnitte (24a,24b) der Führungskurve (22), auf welchen eine starke Beschleunigungs- oder Bremskraft von oder auf die Führungselemente bzw. die hin-und-herbewegten Teile(21) übertragen wird, aus zwei Kreisbögen zusammengesetzt sind. Ein Geradenabschnitt ist ein Kreisbogen eines Kreises mit unendlichem Radius.
Der Mittelpunkt (29) des Kreises, der zu einem solchen Kreisbogen gehört, wird folgender maßen gefunden:
Man errichte die Normalen (32a,32b) der beiden an einen Kreisbogen (30) anschließenden Kurvenabschnitte (33)(34) der Führungskurve (22) im Schnittpunkt des betreffenden Kurvenabschnitts (33 bzw.34) mit dem Kreisbogen (8o) d.h. in dem Punkt der Führungskurve (22) in dem sich die Krümmung ändert. Die Normale steht bekanntlich auf der Tangente (31a,31b) senkrecht. Wählt man den Schnittpunkt der beiden Normalen (32a,32b) als Kreismittelpunkt(29), dann ist bei entsprechender Berücksichtigung der Hubhöhe des hin-und herbewegten Teils (21) und der sich daraus ergebenden Form der Führungskurve(22) die Normale zwischen dem Schnittpunkt von Kurvenabschnitt(33,34) und Kreisbogen (30) und dem Normalenschnittpunkt (29) Radius des Kreisbogens.

Damit sind die Normalen (32a,32b) auch Normalen des Kreisbogens(3o) und damit auch die Tangenten (31a,31b) Tangenten an den Kreisbogen. Die Führungskurve (22) ist damit stetig differenzierbar.

Der eine Kreisbogen (24b) überträgt Zug-, der andere (24a) Druckkräfte zwischen Führungselementen und Führungsspur.

Nun können die Führungselemente (25a,25b) so gestaltet werden, daß am Führungselement Gleitflächen sind, die an der Führungsspur entlangfahren und die Fläche (26b), welche die Zugkräfte aufnimmt, die gleiche Krümmung aufweist wie der Kreisbogen (27b) der Führungsspur, der die Zugkräfte überträgt.

Ebenso weist die Fläche (26a), welche die Druckkräfte aufnimmt, die gleiche Krümmung auf, wie der Kreisbogen (27a), der die Druckkräfte überträgt.
Die Führungselemente (25a,25b) sind am hin-und-herbewegten Teil (21) drehbar befestigt, sodaß sich automatisch bei Zug- oder Druckbelastung das Führungselement in die Stellung bringt, daß die belasteten Berührflächen (26a/27a bzw.26b/27b) möglichst groß sind.
Damit liegen bei einer Zug- oder Druckübertragung mindestens die halben,belasteten Elementeflächen (26a,26b) an der Führungsspur an, sodaß durch Vergrößerung dieser Flächen (26a,26b) die Flächenpressung pro $mm^2$ reduziert werden kann.

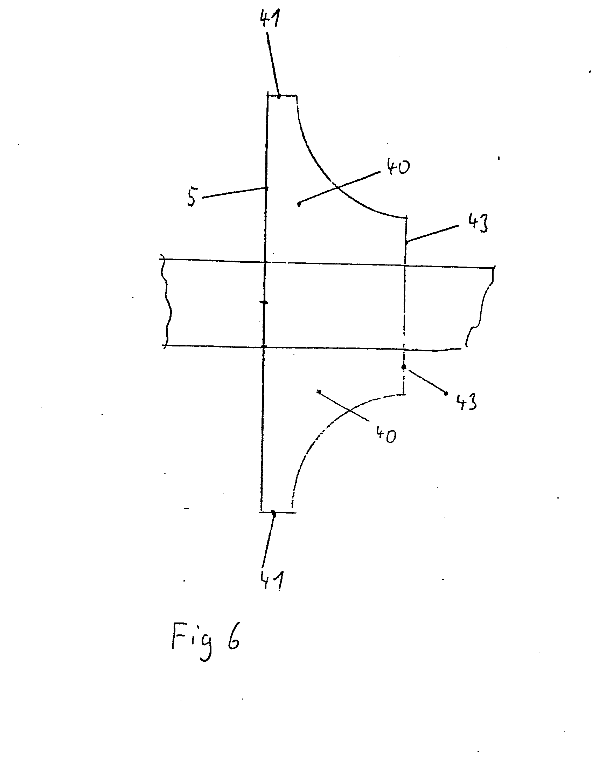

Eine dritte Möglichkeit (Figur 6) einer Maschine zur Regelung der Gasgeschwindigkeit bzw. der Änderung des spezifischen Gasvolumens ist ein Laufrad (5) mit von der Achse weg nach außen verlaufenden Gasführungskanälen (40), in denen bei Drehung des Rades eine Fliehkraftbeschleunigung auf die darin befindlichen Gasmoleküle erzeugt wird. Solche Laufräder werden auch bei Radialverdichtern eingesetzt.

In Umkehrung der Funktion beim Radialverdichter wird ein solches Rad hinter der Brennkammer eingesetzt. Das aus der Brennkammer kommende Gas tritt durch die Umfangsöffnungen (41) in die Gasführungskanäle ein und verläßt diese durch die achsennahen Öffnungen(43). Aufgrund der Strömungsenergie, die beim Eintritt gegen die Schaufeln wirkt, wird das Rad in Drehung versetzt. Damit wirkt in den Gasführungskanälen die Fliehkraft entgegen der Gasströmung, sodaß die Gasgeschwindigkeit im Laufrad reduziert wird. Damit wird der beabsichtigte Gasstau vor dem Laufrad und die gewünschte Festlegung des spezifischen Volumens vor dem Laufrad ermöglicht.

In Patentanspruch 9 wird ein Verfahren zur Regelung der Gasgeschwindigkeit in der Brennkammer aufgeführt.
Verwendet man beispielsweise eine unter Patentanspruch 7 gekennzeichnete Maschine als Verdichter( 1) und eine unter Patentanspruch 3 gekennzeichnete als Kraftmaschinenstufe (3) hinter der Brennkammer, dann ist eine Regelung der Überschußleistung der Kraftmaschine mit getrenntem Verdichter- und Kraftmaschinenteil auch über eine Regelung der durchgesetzten Luftmenge möglich.

Herkömmliche Gasturbinenanlagen können dies meist nur über Variation der Maximaltemperatur in der Brennkammer, da Turboverdichter und Gasturbinen ihre Leistungen meist nur bei bestimmten Drehzahlen erbringen und daraus ein bestimmter Luftmengendurchsatz resultiert.

Damit die Flamme am Brenner (48) nicht zum Verdichter zurückschlägt, andererseits aber auch nicht die Kraftmaschine erreicht oder gar aufgrund zu hoher Gasgeschwindigkeit verlöscht, muß die Gasgeschwindigkeit in der Brennkammer in einem bestimmten Bereich liegen.

Variiert man nun die durchgesetzte Luftmenge, ändert sich aufgrund der Kontinuitätsgleichung die Geschwindigkeit und das spezifische Volumen in der Brennkammer.

Hier will die in Patentanspruch 9 gekennzeichnete Erfindung Abhilfe schaffen (Figur 1). Eine ringförmige Vorrichtung (45) teilt den vom Verdichter (1) kommenden Luftstrom in einen Kühlluftstrom (46) und einen am Brenner vorbeiführenden Erhitzungsstrom (47). Der Querschnitt des gesamten Luftstroms um den Brenner wird damit zu Querschnitt Kühlluftstrom + Querschnitt Erhitzungsstrom.

Der Brenner (48) ist auf einem Brennerträger (49) befestigt und ragt in die ringförmige Vorrichtung (45) hinein. Durch Verschieben der Vorrichtung wird die Querschnittsfläche des Kühlluftstroms und damit des Luftstroms am Brenner so geändert, daß die gewünschte Gasgeschwindigkeit im Rahmen der Kontinuitätsgleichung erreicht wird.

Patentansprüche:

1. Eine Wärmekraftmaschine mit getrenntem Verdichter (1) - und Kraftmaschinenteil (3,4), bei der ein gas- oder dampfförmiges Medium eine Brennkammer (2) durchströmt in der ihm permanent Wärmeenergie zugeführt wird,
   - dadurch gekennzeichnet, daß eine oder mehrere Kraftmaschinenstufen Strömungsenergie in Drehenergie umwandeln und kontinuierlich arbeitende Maschinen (3) als Strömungsmaschinen oder als Teile oder Stufen von Strömungsmaschinen oder hinter der Brennkammer und vor Strömungsmaschinen den Gasfluß so regulieren, daß bei Gasgeschwindigkeiten im Unterschallbereich das spezifische Gasvolumen am Brennkammerausgang so festgelegt werden kann, daß in der Brennkammer je nach Arbeit der Maschine (3) isochore, isobare oder in einer gewünschten Relation gemischte Wärmezuführung erfolgt.
2. Eine Maschine, mit der der Gasmengenfluß von einem Raum höheren Drucks zu einem Raum niedrigeren Druck reguliert werden kann,
   - dadurch gekennzeichnet, daß sich zwischen zwei Räumen unterschiedlichen Drucks eine Kammer mit unveränderlichem Volumen befindet, die wechselweise zum Raum höheren und zum Raum niedrigeren Drucks geöffnet wird.
3. Eine unter Patentanspruch 2 gekennzeichnete Maschine,
   - zusätzlich dadurch gekennzeichnet, daß Kammern durch Räume (9) zwischen den Schaufeln (1o) eines Schaufelrades (5) gebildet werden, das sich in einem Gehäuse (14) mit Zulauföffnungen (7) von einem Raum höheren Drucks und Ablauföffnungen (8) zu einem Raum niedrigeren Drucks dreht, und die Zu- und Ablauföffnungen so angeordnet sind, daß ein Raum (9) zwischen zwei Schaufeln (10) nicht gleichzeitig zu Zu- und Ablauföffnung offen ist.

4. Ein Schaufelrad (5) mit dem Strömungsenergie eines heißen Gases oder Dampfes in Drehenergie umgewandelt wird oder mit dem ein gasförmiges Medium in einem Axialverdichter verdichtet wird,
- dadurch gekennzeichnet,
daß die Schaufeln mit ihren Außenenden in einem um die Achse (18) führenden Ring (13) stecken, der so in einer Vertiefung im Gehäuse (14) liegt, daß die Öffnung (15) des zur Drehung des Ringes notwendigen Spalts (17) zwischen Ring und Gehäuse entweder quer zu Strömung oder im durch das Gehäuse bzw. den Ring erzeugten Strömungsschatten liegt, und daß die Verbindung zwischen Schaufeln (10) und Achse (18) oder Schaufeln und Ring (13) oder verschiedenen Schaufelteilen so ist, daß eine Längendehnung der Schaufeln möglich ist, aber der Abstand Drehachse/Ring durch die Wärmedehnung der Schaufeln nicht geändert wird.

5. Eine Turbine oder ein Axialverdichter oder eine unter Patentanspruch 3 gekennzeichnete Maschine,
- dadurch gekennzeichnet,
daß ein oder mehrere unter Patentanspruch 4 gekennzeichnete Schaufelräder verwendet werden.

6. Ein Kraftübertragungssystem zwischen drehenden und hin-und-hergehenden Teilen, bei dem ein hin - und -hergehendes Teil ein- oder mehrmals pro Umdrehung des drehenden Teiles hin-und-herbewegt wird,
- dadurch gekennzeichnet,
daß die sich mit dem drehenden Teil bewegten, Zug- und Druckkräfte aufnehmenden Führungsspuren (23) so geformt sind, daß die Abschnitte (24a,24b) der Führungskurve (22) in denen Beschleunigungs- oder Bremskräfte der hin-und -hergehenden Teile hohe Zug- oder Druckkräfte zwischen den Führungselementen (25a,25b) der hin-und-herbewegten Teile und der Führungsspur (23) erzeugen, aus zwei Kreisbögen (24a,24b) zusammengesetzt sind, deren Kreismittelpunkte auf den Schnittpunkten (29) der Normalen (32a,32b) liegen, die durch den

0085119

Schnittpunkt von Kreisbogen (30) und anschließender Kurve (33,34) und auf der Tangente (31a,31b) in diesem Punkt an die anschließende Kurve (33,34) senkrecht stehen, und die Flächen (26a,26b) an den Führungselementen (25a,25b) der hin-und-herbewegten Teile, die zeitweise Zug-oder Druckkräfte aufnehmen, die gleiche Krümmung wie die Berührungsfläche (27a,27b) der Führungsspur (23), die dann an diesen Flächen (26a,26b) anliegt, aufweisen, und die Führungselemente (25a,25b) am hin-und-hergehenden Teil drehbar gelagert sind, sodaß sich bei Belastung einer Elementfläche (26a,26b) automatisch eine maximale Pressungsfläche (26a/27a) (26b,27b) zwischen Element und Führungsspur ergibt.

7. Eine Rotationskolbenmaschine mit Schiebern im Gehäuse, bei der in einem Gehäuse ein Rotationskolben in einer Achse drehbar gelagert ist und die Schieber in Schlitzen im Gehäuse hin-und-herbewegt werden, die mit Führungselementen (25a,25b), die an einer gleichförmig mit dem Kolben bewegten Führungsspur (23) entlangfahren, hin-und-herbewegt werden,

- dadurch gekennzeichnet,
  daß ein unter Patentanspruch 6 gekennzeichnetes Kraftübertragungssystem für die Kraftübertragung zwischen Schieber und Führungsspur verwandt wird.

8. Eine unter Patentanspruch 1 gekennzeichnete Wärmekraftmaschine - zusätzlich dadurch gekennzeichnet,
  daß eine oder mehrere der unter Patentanspruch2 und/oder der unter Patentanspruch 3 und/oder Patentanspruch 5 und/ oder Patentanspruch 7 gekennzeichneten Maschinen verwendet werden
  und/oder daß ein Laufrad (5) mit von der Achse weg nach außen verlaufenden Gasführungskanälen (40) verwendet wird, das so hinter der Brennkammer eingebaut wird, daß die aus der Brennkammer strömende Luft in die Umfangsöffnungen (41) der Gasführungskanäle (40) und die Kanäle durch die achsennahen Öffnungen (43) verläßt und von dort zur nächsten Turbinenstufe strömt.

9. Eine Vorrichtung (45) in der Brennkammer von Wärmekraftmaschinen mit getrenntem Verdichter- und Kraftmaschinenteil, die dient, den vom Verdichter kommenden Luftstrom in einen Kühlluftstrom (46), der nicht direkt am Brenner (48) vorbeiströmt, und einen Erhitzungsstrom (47), der am Brenner (48) oder den Wärmetauscherflächen vorbeiströmt und dem dort Wärmeenergie zugeführt wird, aufzuteilen,

- dadurch gekennzeichnet,

  daß die Querschnittsfläche des Kühlluftstromes durch Verschieben der Vorrichtung (45) so geändert werden kann, daß damit die Querschnittsfläche des gesamten vom Verdichter kommenden Luftstroms geändert wird und damit die Strömungsgeschwindigkeit der Luft am Brenner (48) reguliert werden kann.

46
18
11
14
9
7
6
5
8
10
12
49
48
47
45
2
1
4

Figur 1.

BAD ORIGINAL

11
7
5
14
12
8
10a
10
10b
12
8
18
14
6
9

Figur 2

10
16
8
13
7
10a
10
17
14
5
18
10b

Figur 3a

0085119

11
8
10a
10b
18
7
11
14
17
15
10
16
13
14

Figur 3b

20
23
22
27a
24a
24b
27b
25b
26a
25a
34
26b
30
31a
29
27b
31b
27a
33
32b
32a

Figur 4

BAD ORIGINAL

21
25a
26a
20
25b
26b

Figur 5

41
40
5
43
43
40
41

Fig 6

W
kJ/kg
200
150
100
ε = 4
ε = 3
ε = 6
ε = 8
ψ = 1,3
ψ = 1,0
IB
$\eta_e$
35%
30%
25%

Figur 7.

Europäisches Patentamt

# EUROPÄISCHER RECHERCHENBERICHT

0085119

Nummer der Anmeldung

EP 82 10 0616

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US - A - 2 557 198 (W.M. NICHOLS) * Spalte 3, Zeile 17 - Spalte 4, Zeile 21; Figur 1 * | 1 | F 02 C 3/02<br>5/12<br>F 23 R 3/26 |
| X | NL - A - 69 06708 (H. VAN DER MEULEN) * Seite 4, Zeilen 11-16 * | 1 | |
| X | US - A - 1 938 686 (F.N. BROOKE) * Spalte 1, Zeilen 5-19 * | 1 | |
| | | | RECHERCHIERTE SACHGEBIETE (Int. Cl. 3) |
| A | US - A - 3 992 877 (GRANGER) * Spalte 1, Zeilen 40-54 * | 1,9 | F 23 R<br>F 02 C<br>F 04 F |
| A | DE - C - 954 834 (MAX A. MULLER) * Das ganze Dokument * | 1-5 | |
| A | GB - A - 1 073 195 (ROLLS ROYCE) * Seite 3, Zeilen 69-76; Figur 1 * | 1-3 | |

--

./.

~~Der vorliegende Recherchenbericht wurde für alle Patentansprüche erstellt.~~

| Recherchenort | Abschlußdatum der Recherche | Prüfer |
|---|---|---|
| Den Haag | 29-09-1982 | McGINLEY |

KATEGORIE DER GENANNTEN DOKUMENTEN

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03.82

Europäisches Patentamt

EUROPÄISCHER RECHERCHENBERICHT

Nummer der Anmeldung

-2- EP 82 10 0616

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| A | US - A - 2 655 787 (E.D. BROWN)<br>* Spalte 1, Zeilen 19-35 * | 1,9 | |
| | -- | | |
| A | POLYTECHNISCH TIJDSCHRIFT, WERKTUIGBOUW, Band 35, Nr. 5, Mai 1980<br>Den Haag (NL)<br>Dr. Ir. H. VAN DER MEULEN: "Het constantvolume-gasturbineproces volgens karavodine", Seiten 293-298.<br>* Das ganze Dokument * | 1 | RECHERCHIERTE SACHGEBIETE (Int. Cl.³) |
| | -- | | |
| A | THE INSTITUTION OF MECHANICAL ENGINEERS PROCEEDINGS, 1965-66, Band 180, Pt. 1, Nr. 18<br>Londen (GB)<br>P.H. AZOURY: "An introduction to the dynamic pressure exchanger", Seiten 451-480.<br>* Das ganze Dokument * | 1-5 | |
| | -- | | |
| A | DE - C - 850 087 (M.A.N.)<br>* Das ganze Dokument * | 1 | |
| | -- | | |
| A | BE - A - 515 273 (G. JENDRASSIK)<br>* Das ganze Dokument * | 1-5 | |
| | -- | | |
| A | GB - A - 1 092 246 (POWER JETS)<br>* Das ganze Dokument * | 4 | |
| | -- | | |
| DPA | EP - A - 0 045 322 (INGELHEIM) | | |

0085119

Europäisches Patentamt

| | GEBÜHRENPFLICHTIGE PATENTANSPRÜCHE |
|---|---|

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

| X | MANGELNDE EINHEITLICHKEIT DER ERFINDUNG |
|---|---|

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1) Patentansprüche 1,2,3,4,5,8,9, Wärmekraftmaschine

2) Patentansprüche 6,7 Kraftübertragungssystem.

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche 1-5,8,9.